# EUROPEAN PATENT APPLICATION

(11) **EP 0 884 677 A2**
(43) Date of publication of application: **16.12.1998**
(21) Application number: 98250207.2
(22) Date of filing: 12.06.1998
(51) Int. Cl.: G06F 9/38

(54) **Data processing apparatus having co-processor**

(30) Priority: 13.06.1997 JP 156772/97
(71) Applicant: NEC CORPORATION, Tokyo (JP)
(72) Inventor: Koike, Tsuneo, c/o NEC Corporation, Tokyo (JP)
(74) Representative: Patentanwälte Wenzel & Kalkoff

(57) **Abstract**

A data processing apparatus having an unused co-processor in addition to at least one co-processor which operates in synchronism with a central processing unit having an instruction supply unit and an instruction processing unit, operates only for a corresponding instruction, and assists and expands the function of the central processing unit, includes an instruction converter and a supply stop unit. The instruction converter receives, as an input, an additional instruction assigned as an instruction to the unused co-processor, converts the additional instruction into an instruction string which can be processed by the instruction processing unit, and outputs the instruction string to the instruction processing unit. The supply stop unit stops instruction supply from the instruction supply unit to the instruction processing unit during operation of the instruction converter.

## Description

### BACKGROUND OF THE INVENTION

### 1. FIELD OF THE INVENTION

The present invention relates to a data processing apparatus and, more particularly, to a data processing apparatus with a central processing unit to which a coprocessor can be connected.

### 2. DESCRIPTION OF THE PRIOR ART

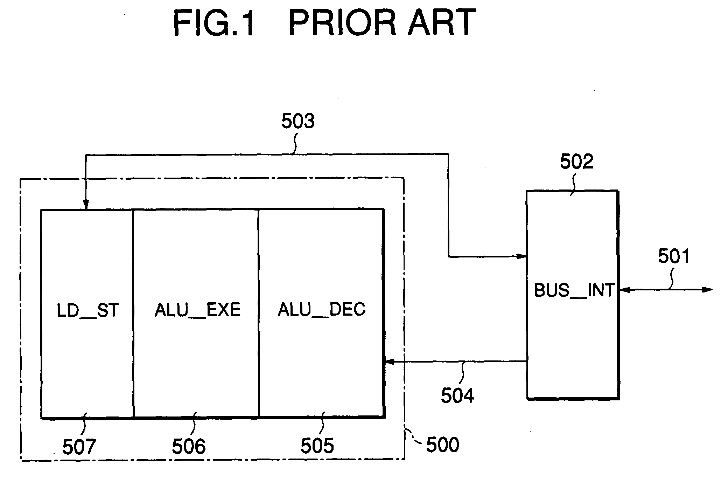

Fig. 1 is a block diagram showing an example of a conventional data processing apparatus. In Fig. 1, a system bus 501 exchanges data with a memory device or an I/O device (neither is shown) outside a central processing unit 500 under the control of a bus interface unit(BUS_INT) 502. A data bus 503 serves as a path for a data write in the memory device and data exchange with the memory device in a read that occur in a load store unit (LD_ST) 507.

An instruction bus 504 is used as a path for an instruction sent to an ALU decoder (ALU_DEC) 505 via the bus interface 502. The ALU decoder 505 decodes an instruction to determine processing to be performed. An ALU executor (ALU_EXE) 506 executes the processing according to the instruction decoded by the ALU decoder 505. When the instruction indicates data exchange with the memory device or the I/O device, data is processed and exchanged by the load store unit 507. This conventional data processing apparatus does not have any coprocessor or cache memory.

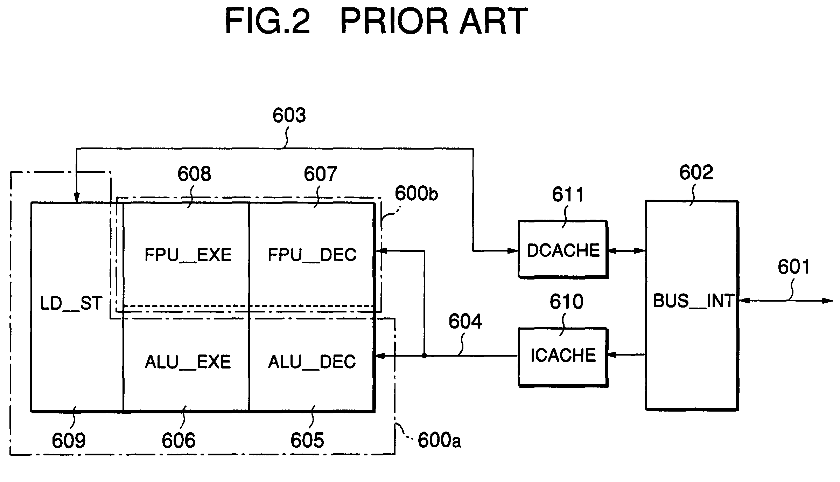

Fig. 2 is a block diagram showing another example of the conventional data processing apparatus. This conventional data processing apparatus comprises a central processing unit 600a having a coprocessor 600b and a cache memory. The coprocessor 600b is a device which receives an instruction in synchronism with the central processing unit 600a having the same arrangement as that of the central processing unit 500 shown in Fig. 1, operates independently of the central processing unit 600a, and processes data. For example, floating-point arithmetic operation is often performed by the coprocessor 600b independently of the central processing unit 600a. Since the degree of integration is increasing along with the recent advance in semiconductor technology, central processing units incorporating coprocessors are available. With an increase in operation frequency, the operation speed of the memory device cannot catch up with the speed of the central processing unit, resulting in low throughput. To prevent this, a high-speed memory device is mounted on the central processing unit by a cache memory technique. Data processing apparatuses with central processing units incorporating cache memories are also introduced.

In Fig. 2, a system bus 601, a bus interface 602, an ALU decoder 605, an ALU executor 606, and a load store unit 609 basically operate similarly to those shown in Fig. 1. An instruction bus 604 supplies an instruction to a coprocessor decoder (FPU_DEC) 607 in addition to the ALU decoder 605. A coprocessor instruction decoded by the coprocessor decoder 607 is processed by a coprocessor executor (FPU_EXE) 608. If necessary, the load store unit 609 exchanges data with the memory device.

An instruction cache (ICACHE) 610 and a data cache (DCACHE) 611 are respectively inserted in the instruction bus 604 and a data bus 603, and operate to compensate for the speed difference between the data processing apparatus and the memory device, as described above.

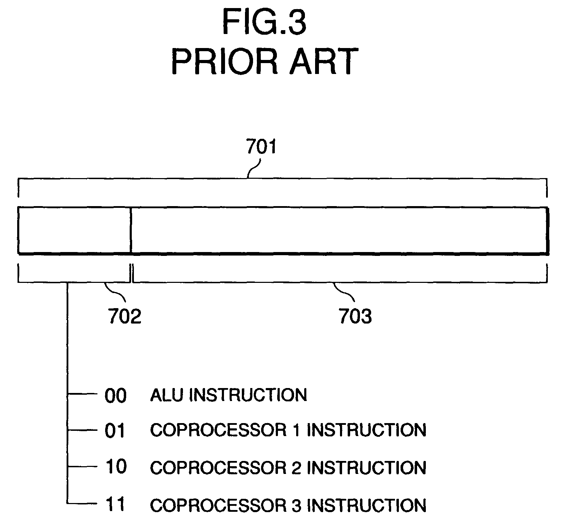

Fig. 3 shows an example of the structure of an instruc tion to the central processing unit having the coprocessor. An instruction 701 represents one instruction and is made up of an instruction group field 702 and a detailed instruction field 703. The instruction group fieid 702 is made up of 2 bits, and represents an ALU instruction for a 2-bit value of "00", a coprocessor 1 instruction for "01", a coprocessor 2 instruction for "10", and a coprocessor 3 instruction for "11".

The ALU decoder 605 and the coprocessor decoder 607 shown in Fig. 2 simultaneously decode an instruction, and operate their executors for a corresponding instruction. Otherwise, they do not operate any executors. In Fig. 2, although only coprocessor 1 is mounted, a reservation portion is defined in the instruction group field 702 so as to allow expansion to coprocessors 2 and 3, similar to coprocessor 1. For a coprocessor 2 instruction, no ALU and no coprocessor 1 operate.

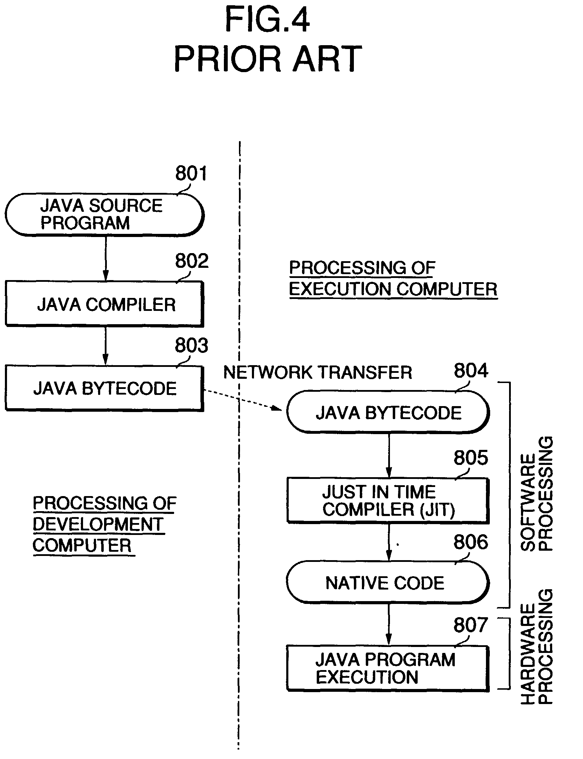

Instructions are added to the central processing unit in order to, e.g., enhance instructions, or meet the industrial standard. Addition of instructions to meet the industrial standard will be exemplified. An instruction to the central processing unit defines a unique instruction in order to enhance its feature. On the other hand, there are an instruction in which an industrial standard instruction is defined to increase the software efficiency, and an instruction substantially serving as the industrial standard. The industrial standard instruction will be described by exemplifying a Java program with reference to Fig. 4.

The left half of Fig. 4 shows the processing operation by a development computer, and the right half shows the processing operation by the execution computer. When a Java source program 801 is compiled by a Java compiler 802, a Java instruction called a Java bytecode 803 is output. The bytecode 803 is executed in an environment called a Java virtual machine.

Various Java execution environments exist and are developed. In a JIT (Just In Time) compiler environment as one of the Java execution environments, the Java bytecode 803 is transferred to the execution computer via a network or the like. A transferred Java bytecode 804 is compiled by a JIT compiler 805, and the compiled bytecode is converted into a Native code 806 as an instruction string to the execution computer. The Native code 806 is executed as Java program execution 807. In this manner, distributed software is standardized as the Java bytecode 803. However, to practically execute the software by the computer, software processing of converting the software into the Native code 806 must be performed.

In the above data processing apparatus, the industrial standard instruction described above, a stronger instruction, or a custom instruction following a customer's request is often added to enhance the value added. As a method of adding such an instruction, an instruction decoder and an instruction executor are changed, or a coprocessor is added.

By these methods, the whole central processing unit must be redesigned, and many design steps and many evaluation steps are required. Particularly when a coprocessor is added, control over the decoder, the executor, and the load store unit must be changed, and the circuit scale becomes large.

An improved data processing apparatus with a central processing unit in which an additional instruction code can be easily decoded without redesigning the hardware of an instruction decoder has conventionally been known (Japanese Unexamined Patent Publication No. 5-88885). Fig. 5 is a block diagram showing an example of this conventional improved data processing apparatus. The improved data processing apparatus comprises an additional instruction decoder 908 in addition to a system bus 901, a bus interface 902, a data bus 903, an instruction bus 904, an ALU decoder 905, an ALU executor 906, and a load store unit 907.

In the conventional improved data processing apparatus, the additional instruction decoder 908 receives an instruction via the instruction bus 904 and decodes it. If the instruction is an additional instruction, the additional instruction decoder 908 controls the ALU executor 906 to perform instruction processing.

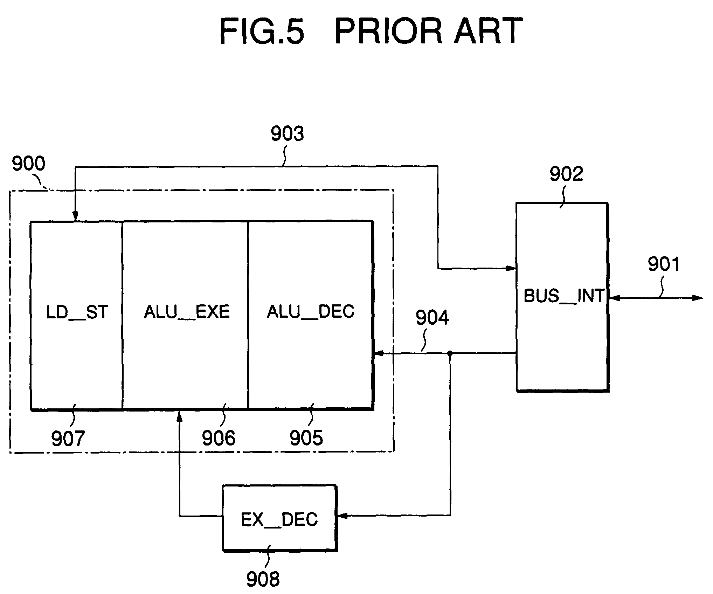

In the conventional improved data processing apparatus, however, the ALU executor 906 must be controlled every additional instruction, which is equivalent to redesigning of a whole central processing unit 900. In addition upon detection of an undefined instruction, the ALU decoder 905 generally stops execution as "reserved instruction exception". Therefore, in the conventional data processing apparatus in Fig. 5, the ALU decoder 905 must also be changed in correspondence with an instruction added by the above method.

### SUMMARY OF THE INVENTION

The present invention has been made in consideration of the conventional drawbacks, and has as its object to provide a data processing apparatus to which an instruction can be added without changing an instruction processing unit.

It is another object of the present invention to provide a data processing apparatus capable of executing processing at a higher speed than software processing.

To achieve the above objects, according to the present invention, an additional instruction is assigned to a coprocessor and converted into an instruction string which can be processed by an instruction processing unit. The instruction string is processed by the instruction processing unit of a central processing unit. With this arrangement, an instruction can be added to the central processing unit without changing the instruction processing unit as the main part of the central processing unit.

According to the main aspect of the present invention, there is provided a data processing apparatus having an unused coprocessor in addition to at least one coprocessor which operates in synchronism with a central processing unit having an instruction supply unit and an instruction processing unit, operates only for a corresponding instruction, and assists and expands a function of the central processing unit, comprising instruction conversion means for receiving, as an input, an additional instruction assigned as an instruction to the unused coprocessor, converting the additional instruction into an instruction string which can be processed by the instruction processing unit, and outputting the instruction string to the instruction processing unit, and supply stop means for stopping instruction supply from the instruction supply unit to the instruction processing unit during operation of the instruction conversion means.

According to the present invention, an additional instruction is assigned to an unused coprocessor and converted into an instruction string which can be processed by the instruction processing unit. The instruction string is processed by the instruction processing unit of a central processing unit. An instruction can be added to the central processing unit without changing the instruction processing unit of the central processing unit. Therefore, the design efficiency of the data processing apparatus increases, the design period can be shortened, and the data processing apparatus can immediately meet a custom request.

According to the present invention, the data processing apparatus can also immediately meet the industrial standard such as Java applications, and can perform application processing at a higher speed than conventional software processing.

The above and many other objects, features and advantages of the present invention will become manifest to those skilled in the art upon making reference to the following detailed description and accompanying drawings, in which preferred embodiments incorporating the principles of the present invention are shown by way of illustrative examples.

### BRIEF DESCRIPTION OF THE DRAWINGS

Fig. 1 is a block diagram showing the schematic arrangement of a first prior art structure;
Fig. 2 is a block diagram showing the schematic arrangement of a second prior art structure;
Fig. 3 is a view showing an example of the instruction structure of a prior art central processing unit;
Fig. 4 is an explanatory view of a conventional Java application development/execution environment;
Fig. 5 is a block diagram showing the schematic arrangement of a third prior art structure;
Fig. 6 is a block diagram showing the schematic arrangement of the first embodiment according to the present invention;
Fig. 7 is a block diagram showing the schematic arrangement of the second embodiment according to the present invention; and
Fig. 8 is an explanatory view showing the processing operation of the third embodiment according to the present invention.

### DETAILED DESCRIPTION OF PREFERRED EMBODIMENTS

The present invention will be described in more detail below with reference to several preferred embodiments illustrated in the accompanying drawings.

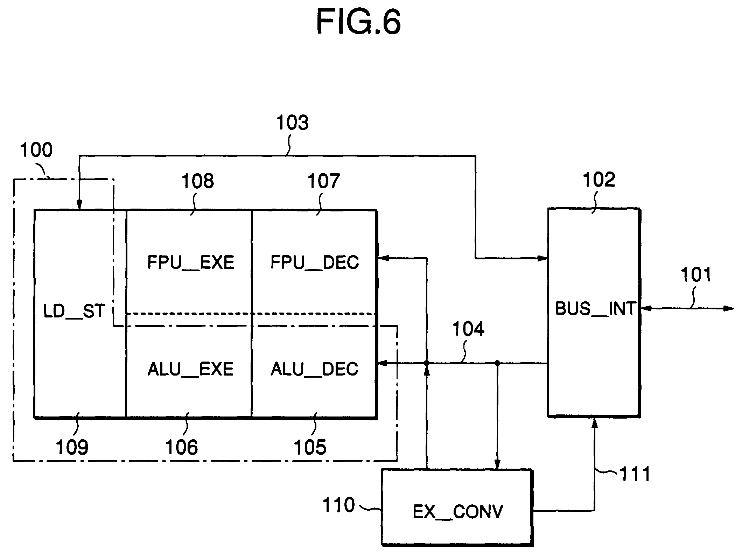

Fig. 6 is a block diagram showing a data processing apparatus according to the first embodiment of the present invention. As shown in Fig. 6, in the first embodiment of the present invention, an additional instruction converter (EX_CONV) 110 is added to the basic arrangement of a conventional data processing apparatus with the coprocessor shown in Fig. 1 that comprises a system bus 101, a bus interface (BUS_INT) 102, a data bus 103, an instruction bus 104, an ALU decoder (ALU_DEC) 105, an ALU executor (ALU_EXE) 106, a coprocessor decoder (FPU_DEC) 107, a coprocessor executor (FPU_EXE) 108, and a load store unit (LD_ST) 109. The additional instruction converter 110 inputs a stop signal 111 to the bus interface 102. When the stop signal 111 is active, supply of an instruction stops, and the instruction bus 104 changes to a high-impedance state.

The additional instruction converter 110 decodes the instruction group field 702 in the instruction structure shown in Fig. 3. If the instruction is a coprocessor 2 instruction or a coprocessor 3 instruction, the additional instruction converter 110 starts operating. At this time, although the ALU decoder 105 and the coprocessor decoder 107 also decode the instruction, they do not issue any operation instruction to the ALU executor 106 and the coprocessor executor 108 so as not to operate them because the instruction is a coprocessor 2 instruction or a coprocessor 3 instruction.

When the additional instruction converter 110 starts operating, it activates the stop signal 111 to be output to the bus interface 102, stops supply of an instruction from the bus interface 102, decodes the detailed instruction field 703 in the instruction structure shown in Fig. 3, generates an instruction string which realizes a designated instruction operation and is identical to that in the conventional central processing unit, and supplies the instruction string to the instruction bus 104.

Similar to the conventional central processing unit, the instruction string on the instruction bus 104 is processed by the ALU decoder 105, the ALU executor 106, the coprocessor decoder 107, the coprocessor executor 108, and the load store unit 109. Upon completion of the conversion of the additional instruction, the stop signal 111 is inactivated, and the next instruction is supplied to the instruction bus 104 via the bus interface 102. When the instruction is not a coprocessor 2 instruction or a coprocessor 3 instruction, the additional instruction converter 110 does not operate, and the data processing apparatus of the first embodiment operates similarly to the conventional data processing apparatus.

A detailed example of the additional instruction converter 110 will be explained with reference to Tables 1, 2, and 3. Instructions listed on Table 1 are set for a central processing unit 100.

**Table 1**

| | | |
|---|---|---|
| NOP | | non-operation instruction: |
| | | performs no operation |
| ADD | SRC, DST, TAR | addition instruction: |
| | | adds the contents of the SRC and DST registers and stores the result in the TAR register |
| SUB | SRC, DST, TAR | subtraction instruction: |
| | | subtracts the contents of the SRC and DST registers and stores the result in the TAR register |
| MUL | SRC, DST | multiplication instruction: |
| | | multiplies the contents of the SRC and DST registers and stores the result in the multiplication/division register |
| DIV | SRC | division instruction: |
| | | divides the content of the multiplication/division register by the content of the SRC register and stores the result in the multiplication/division register [a time for two instructions is required] |
| MFM | TAR | multiplication/division register transfer instruction: |
| | | transfers the content of the multiplication/division register to the TAR register |
| MTM | SRC | multiplication/division register transfer instruction: |
| | | transfers the content of the SRC register to the multiplication/division register |

An additional instruction is a 3-operand multiplication instruction 411 in example 1 of Table 2, a multiplication/addition instruction 421 in example 2, a multiplication/subtraction instruction 431 in example 3, or a division/addition instruction 441 in example 4. These instructions indicate operations listed on Table 3.

**Table 2**

| Example 1: | | |
|---|---|---|
| MUL3 | SRC, DST, TAR | |
| | 3-operand multiplication instruction | 411 |
| MUL | SRC, DST | 412 |
| MFM | TAR | 413 |

| Example 2: | | |
|---|---|---|
| MULADD | SRC, DST, TAR | |
| | multiplication/addition instruction | 421 |
| MUL | SRC, DST | 422 |
| MFM | SRC | 423 |
| ADD | SRC, TAR, TAR | 424 |

| Example 3: | | |
|---|---|---|
| MULSUB | SRC, DST, TAR | |
| | multiplication/subtraction instruction | 431 |
| MUL | SRC, DST | 432 |
| MFM | SRC | 433 |
| SUB | SRC, TAR, TAR | 434 |

| Example 4: | | |
|---|---|---|
| DIVADD | SRC, DST, TAR | |
| | division/addition instruction | 441 |
| MFM | SRC | 442 |
| DIV | DST | 443 |
| NOP | | 444 |
| NOP | | 445 |
| MFM | SRC | 446 |
| ADD | SRC, TAR, TAR | 447 |

**Table 3**

| | | |
|---|---|---|
| MUL | SRC, DST, TAR | 3-operand multiplication instruction: |
| | | calculates the product of the contents of the SRC and DST registers and stores the result in the TAR register |
| MULADD | SRC, DST, TAR | multiplication/addition instruction: |
| | | adds the content of the TAR regis ter to the product of the contents of the SRC and DST registers and stores the result in the TAR register |
| MULSUB | SRC, DST, TAR | multiplication/subtraction instruction: |
| | | subtracts the content of the TAR register from the product of the contents of the SRC and DST registers and stores the result in the TAR register |
| DIVADD | SRC, DST, TAR | division/addition instruction: |
| | | divides the content of the SRC register by the content of the DST register, adds the content of the TAR to the result, and stores the result in the TAR register |

The 3-operand multiplication instruction 411 performs multiplication by the multiplication instruction 412, and converts the result into two instruction strings to be stored in the TAR register by the multiplication/division register transfer instruction. The multiplication/addition instruction 421 performs multiplication by the multiplication instruction 422, transfers the product to the SRC register by the multiplication/division register transfer instruction 423, adds the content of the TAR register to the transferred result by the addition instruction 424, and converts the sum into three instruction strings to be stored in the TAR register.

The multiplication/subtraction instruction 431 performs multiplication by the multiplication instruction 432, transfers the product to the SRC register by the multiplication/division register transfer instruction 433, subtracts the content of the TAR register from the product by the subtraction instruction 434, and converts the difference into three instruction strings to be stored in the TAR register. The division/addition instruction 441 transfers the content of the SRC register to the multiplication/division register by the multiplication/division register transfer instruction 442, divides the content of the SRC register by the content of the DST register by the division instruction 443, waits for the completion of execution of the division instruction 443 by no-operation instructions 444 and 445, transfers the quotient to the SRC register by the multiplication/division register transfer instruction 446, adds the quotient to the content of the TAR register by the addition instruction 447, and converts the sum into six instruction strings to be stored in the TAR register.

The second embodiment of the present invention will be described.

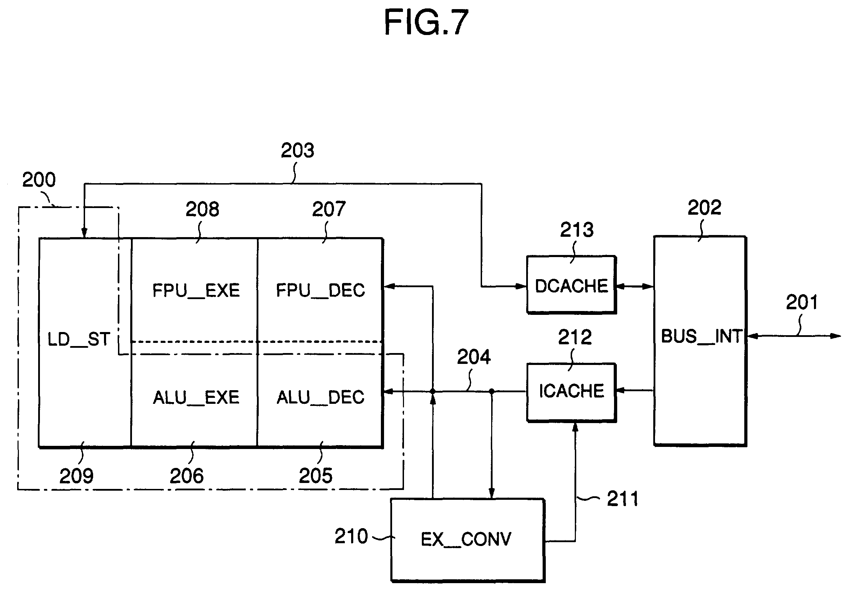

Fig. 7 is a block diagram showing a data processing apparatus according to the second embodiment of the present invention. As shown in Fig. 7, according to the second embodiment, an additional instruction converter (EX_CONV) 210 is added to the conventional data processing apparatus shown in Fig. 2 which comprises a system bus 201, a bus interface (BUS_INT) 202, a data bus 203, an instruction bus 204, an ALU decoder (ALU_DEC) 205, an ALU executor (ALU_EXE) 206, a coprocessor decoder (FPU_DEC) 207, a coprocessor executor (FPU_EXE) 208, a load store unit (LD_ST) 209, an instruction cache (ICACHE) 212, and a data cache (DCACHE) 213. The instruction cache 212 supplies a high-impedance output when a stop signal 211 from the additional instruction converter 210 is active.

The additional instruction converter 210 decodes the instruction group field 702 in the instruction structure shown in Fig. 3. If the instruction is a coprocessor 2 instruction or a coprocessor 3 instruction, the additional instruction converter 210 starts operating. At this time, although the ALU decoder 205 and the coprocessor decoder 207 also decode the instruction, they do not issue any operation instruction to the ALU executor 206 and the coprocessor executor 208 so as not to operate them because the instruction is a coprocessor 2 instruction or a coprocessor 3 instruction.

When the additional instruction converter 210 starts operating, it activates the stop signal 211 to be output to the instruction cache 212, changes an output from the instruction cache 212 to have a high impedance, stops supply of an instruction from the bus interface 202, decodes the detailed instruction field 703 in the instruction structure shown in Fig. 3, generates an instruction string for a central processing unit 200 which realizes a designated instruction operation, and supplies the instruction string to the instruction bus 204.

Similar to the conventional central processing unit, the instruction string on the instruction bus 204 is processed by the ALU decoder 205, the ALU executor 206, the coprocessor decoder 207, the coprocessor executor 208, and the load store unit 209. Upon completion of the conversion of the additional instruction, the stop signal 211 is inactivated, and the operation state returns to a normal state.

The third embodiment of the present invention will be described.

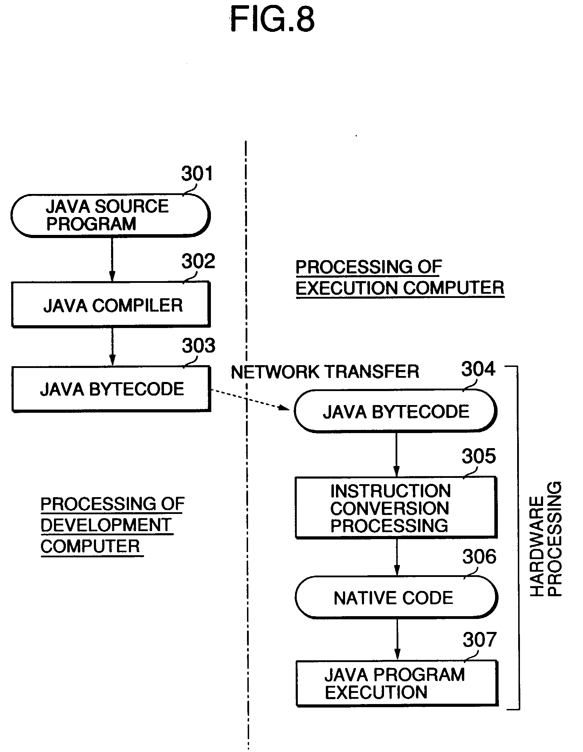

Fig. 8 is an explanatory view of the processing operation of a data processing apparatus according to the third embodiment of the present invention. The left half of Fig. 8 shows processing of a development computer, and the right half shows processing of the execution computer. The third embodiment will exemplify the case wherein the operation of the additional instruction converter 110 is applied to the Java application execution environment described with reference to Fig. 4. In Fig. 8, a Java source program 301, a Java compiler 302, and a Java bytecode 303 are processed on the development computer, similar to the conventional data processing apparatus.

A Java bytecode 304 is the industrial standard in a Java application program transferred to the execution computer via a network. The additional instruction converter 110 converts the Java bytecode 304 into a Native code 306 by instruction conversion processing 305. In Java program execution 307, the Native code 306 is supplied to the instruction bus 104 or 204 in the first or second embodiment and processed by a central processing unit (not shown) according to the same procedure as that in the first embodiment.

Compared to the operation in Fig. 4, processing by the JIT compiler 805 is replaced with the instruction conversion processing 305 in the third embodiment. This is because software processing in the conventional JIT environment is replaced with hardware processing in the third embodiment. Accordingly, a Java application can be processed at a higher speed than in the conventional data processing apparatus.

## Claims

1. A data processing apparatus having an unused co-processor in addition to at least one co-processor which operates in synchronism with a central processing unit having an instruction supply unit and an instruction processing unit, operates only for a corresponding instruction, and assists and expands a function of said central processing unit, comprising:
instruction conversion means for receiving, as an input, an additional instruction assigned as an instruction to said unused coprocessor, converting the additional instruction into an instruction string which can be processed by said instruction processing unit, and outputting the instruction string to said instruction processing unit; and
supply stop means for stopping instruction supply from said instruction supply unit to said instruction processing unit during operation of said instruction conversion means.

2. A data processing apparatus according to claim 1, wherein said supply stop means cancels stop of instruction supply from said instruction supply unit to said instruction processing unit when no additional instruction is input to said instruction conversion means.

3. A data processing apparatus according to claim 1 or 2, wherein said supply stop means stops instruction supply to said instruction processing unit from a bus interface constituting said instruction supply unit during operation of said instruction conversion means.

4. A data processing apparatus according to claim 1 or 2, wherein said supply stop means stops instruction supply to said instruction processing unit from an instruction cache constituting said instruction supply unit during operation of said instruction conversion means.
